# EUROPEAN PATENT SPECIFICATION

(11) **EP 2 468 806 B1**
(45) Date of publication and mention of the grant of the patent: **13.09.2017**
(21) Application number: 11189761.7
(22) Date of filing: 18.11.2011
(51) Int. Cl.: C08J 7/12, B65D 81/38

(54) **Method for functionalizing a container and device for carrying out this method and corresponding container**
Verfahren zur Funktionalisierung eines Behälters und Vorrichtung zur Durchführung dieses Verfahrens und entsprechender Behälter
Procédé de fonctionnalisation d'un conteneur et dispositif d'exécution de ce procédé et conteneur correspondant

(30) Priority: 21.12.2010 DE 102010055301
(43) Date of publication of application: 27.06.2012
(73) Proprietor: L'Air Liquide Société Anonyme pour l'Etude et l'Exploitation des Procédés Georges Claude, 75007 Paris (FR); Air Liquide Deutschland GmbH, 40235 Düsseldorf (DE)
(72) Inventor: Van Bonn, Rolf, 47269 Duisburg (DE)
(74) Representative: Mellul-Bendelac, Sylvie Lisette

(56) References cited:
- WO-A2-2010/077862
- DE-A1-102008 059 125
- GB-A- 2 089 950
- US-A1- 2008 026 143

## Description

The present invention relates to a method for functionalizing, in particular fluorinating, a plastic container. The method according to the invention is preferably employed for the fluorination of containers with large volumes, in particular with volumes of 1 m³ (cubic metre) or more up to 60 m³ or more.

The document GB-2 089 950 illustrates the domain of thermally insulated containers.

Methods for the fluorination of, in particular, small objects or limited geometries are known for example from DE-A-10 2007 060 913 or DE-A-10 2008 059 125. These methods must generally be carried out so that no reactive gas, i.e. in particular no gas containing fluorine or chlorine, can escape into the environment. Besides preventing environmental damage, this also serves to prevent harm to the health of the operating personnel. For this reason, such functionalization methods, for example gas phase fluorination, are always carried out in such a way that the reactive gas is suctioned away and it is possible to prevent individuals from coming in contact with the reactive gas. In particular, these methods are carried out in appropriately equipped rooms, for example clean rooms.

The document US2008/026143 illustrates a method for the fluorination of the wall surfaces of pipes.

The methods known from the prior art reach their limits in particular when the objects to be fluorinated have large volumes. For large containers, for example storage containers for storing lyes or bases, which may have a volume of up to 60 m³ or more, it has not previously been possible to carry out fluorination.

The present invention relates to a method, to a corresponding device and to a corresponding container, with which the problems known from the prior art can at least partially be overcome. In particular, it is an object to provide a method for functionalizing a container, with which even containers with large volumes can be functionalized reliably.

These objects are achieved by the features of the independent claims. The respective dependent claims relate to corresponding refinements.

The present invention relates to a method for functionalizing a plastic container, the container being bounded externally by a double wall which consists of an inner wall forming an internal space of the container and an outer wall surrounding the former, an intermediate space being formed between the inner wall and the outer wall, wherein a reactive gas comprising at least one of the following reactive substances:
a. fluorine; and
b. chlorine
is fed for at least a predeterminable treatment time into the internal space, which is subsequently flushed for at least a predeterminable flushing time with a flushing gas free of reactive substances.

The functionalization of surfaces is intended to mean the at least partial replacement of hydrogen atoms in plastic surfaces by other atoms, for example fluorine or chlorine. The functionalization serves to modify the surface properties of the surface of the plastics. This involves in particular the changing of properties such as for example the static and/or sliding friction, the permeation coefficient, etc.

The method according to the invention is preferably used for fluorination, in which the reactive substance comprises fluorine. In this case, the reactive gas preferably consists of a mixture of fluorine and an inert gas, for example nitrogen (N₂).

A flushing gas free of reactive substances is intended to mean in particular an inert gas, for example nitrogen or air, in which the concentration of the reactive substances is less than 0.2 vol%, preferably less than 0.01 vol% and particularly preferably 0.001 vol% or less. The term flushing is intended to mean, for example, a continuous flushing process in which the flushing gas flows through the container for the flushing time, or a discontinuous flushing process in which the flushing gas is introduced to the container, left therein for the flushing time and then removed therefrom.

By the method according to the invention, functionalization of only the inner side of the inner wall of the container takes place. During normal operation, no reactive substance enters the intermediate space between the inner wall and the outer wall. The outer wall is consequently used as an additional safety measure, since, even if the inner wall breaks or has a leak, it prevents the reactive gas or reactive substance from being released into the environment. This protects the operating personnel reliably against any contamination with reactive substance during the functionalization, and prevents the latter from being released into the environment. Thus, even containers with very large volumes, for example with an internal space volume of 1 m³ or more, preferably 5 m³ or more, particularly preferably 10, 20, 30 or 40 m³ or more can be functionalized, and in particular fluorinated. For containers of this order of magnitude, functionalization by the method known from the prior art is virtually impossible without tolerating a possible hazard for the environment and the operating personnel in the event of a leak.

According to an advantageous configuration of the method according to the invention, the concentration of the at least one reactive substance in the intermediate space is monitored at least during the at least one treatment time.

To this end, a corresponding measurement sensor is formed in the intermediate space or this intermediate space is connected or connectable to a corresponding measurement sensor, so that the gas contained in the intermediate space also comes in contact with the measurement sensor. Thus, even if a breach of the inner wall occurs, an alarm is triggered and optionally the functionalization is stopped and a flushing phase is entered.

Monitoring the concentration of the at least one reactive substance in the intermediate space is a further safety measure which increases the safety of the environment and the operating personnel. Thus, functionalizations can be carried out safely even for large containers. With these functionalized containers, it is not necessary to use high-grade plastics, for example for storing bases or acids. Overall, these containers can therefore be produced more economically.

According to another advantageous configuration of the method according to the invention, the concentration of the at least one reactive substance in the intermediate space is monitored by at least one of the following measures:
a. connecting the intermediate space to a measurement sensor for monitoring the concentration of the at least one reactive substance; and
b. flushing the intermediate space with flushing gas, the concentration of the at least one reactive substance in the flushing gas being monitored downstream of the intermediate space.

This allows on the one hand direct introduction of the measurement sensor into the intermediate space or into connection with the intermediate space, and on the other hand monitoring of the exhaust gas in a process of flushing the intermediate space, respectively for the concentration of the reactive substance.

According to another advantageous configuration of the method according to the invention, the feeding of the reactive gas into the internal space is interrupted when the concentration of the at least one reactive substance in the intermediate space exceeds a predeterminable limit value.

If the predeterminable limit value for the concentration of the reactive substance in the intermediate space is exceeded, this is interpreted as an indication that there is a breach of the inner wall and reactive gas comprising reactive substance has thus entered the intermediate space from the internal space. In this case - if a treatment time is currently in progress - the treatment is stopped and the supply of the reactive gas into the internal space is interrupted. The limit value is preferably established so that its being exceeded can reliably be attributed to a leak of the inner wall.

According to another advantageous configuration of the method according to the invention, flushing of the intermediate space with flushing gas is initiated when the concentration of the at least one reactive substance in the intermediate space exceeds a predeterminable limit value.

If there is a breach of the inner wall and the concentration of the reactive substance in the intermediate space exceeds a predeterminable limit value, a flushing process is immediately initiated in order to flush reactive substance still contained in the internal space and now also present in the intermediate space out of the container. At the same time, it is possible to store or use these data so as to directly signal a product defect, since a leak of the inner wall is not tolerable specifically when the container is intended to use as a holding container for acids or bases.

Another aspect of the present invention provides a plastic container for functionalization by the method according to the invention and/or for functionalization in a device according to the invention, the container being bounded externally by a double wall which consists of an inner wall forming an internal space of the container and an outer wall surrounding the former, an intermediate space being formed between the inner wall and the outer wall, comprising at least one internal space connection through which at least one gas can be fed into the internal space of the container and/or discharged therefrom, and at least one intermediate space connection through which the intermediate space can be connected to a measurement sensor for the at least one reactive substance.

The internal space connections and the intermediate space connections are preferably configured so that they can be connected to a corresponding device.

The invention will be explained by way of example below with the aid of the appended figures, without being restricted to the exemplary embodiments shown therein. Schematically:
- Fig. 1:: shows an explanation of the procedure of the method according to the invention;
- Fig. 2:: shows a first exemplary embodiment of a device allowing the implementation of the method according to the invention;
- Fig. 3:: shows a second exemplary embodiment of a device allowing the implementation of the method according to the invention;
- Fig. 4:: shows a third exemplary embodiment of a device allowing the implementation of the method according to the invention.

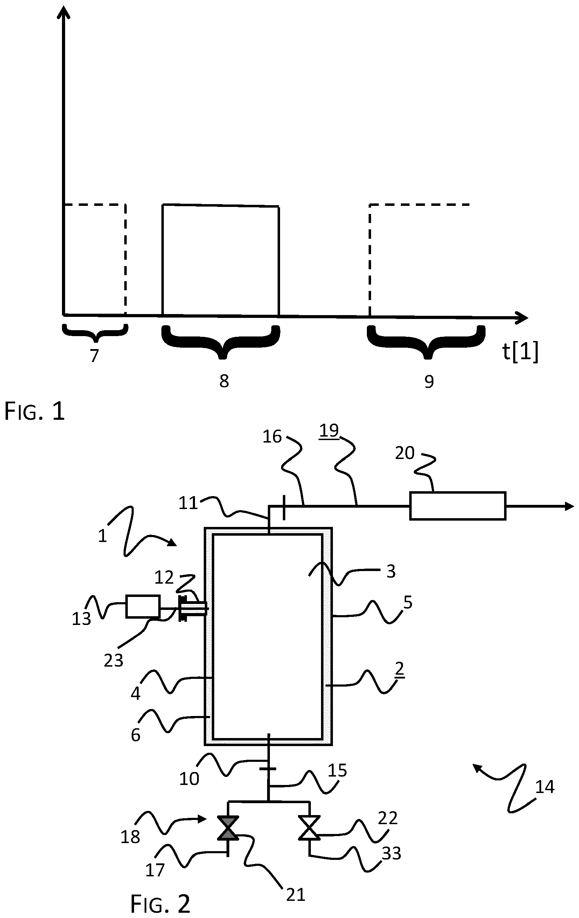

In the method according to the invention for functionalizing a plastic container 1, as shown for example in Fig. 2, this container 1 has a double wall 2 which bounds the container 1 externally. The double wall 2 comprises an inner wall 4 forming an internal space 3 of the container, and an outer wall 5 surrounding the former. An intermediate space 6 is formed between the inner wall 4 and the outer wall 5. In the method according to the invention, a reactive gas comprising fluorine and/or chlorine, preferably fluorine, preferably a mixture of nitrogen and fluorine with fluorine as the reactive substance, is fed into the internal space 3. According to Fig. 1, the internal space 3 is initially flushed for a first flushing time 7 with a flushing gas, which is essentially free of the reactive substances used. To this end, the flushing gas is introduced one or more times into the intermediate space 3 and then removed therefrom. Subsequently, the reactive gas is introduced into the intermediate space for a treatment time 8. This is followed by flushing the intermediate space 3 again for a second flushing time 9.

The reactive gas preferably comprises a mixture of fluorine and nitrogen, in particular 10 vol% fluorine in 90 vol% nitrogen or 5 vol% fluorine in 95 vol% nitrogen. The length of the treatment times 8 and the flushing times 7, 9, and the number of treatment and/or flushing processes, may be adapted according to the degree of functionalization to be achieved.

According to the invention, the double wall 2 of the container 1 is used as a safety measure. Functionalization is carried out, in particular fluorination, in particular of the inner side of the inner wall 4 of the container 1. The double wall 2 and the intermediate space 6, between the inner wall 4 and the outer wall 5, preferably serve as a safety measure by which no reactive gas can emerge through the outer wall 5 even if the inner wall 4 has a leak.

In the first exemplary embodiment according to Fig. 2, the container 1 has a first internal space connection 10 and a second internal space connection 11. Via the two internal space connections 10, 11, it is possible to introduce gases into the internal space 3 of the container 1 and discharge them therefrom. The container 1 furthermore has a first intermediate space connection 12. Connected gas-tightly thereto via an intermediate space connection unit 23, there is a measurement sensor 13 by which the fluorine content of the gas in the intermediate space 6 is monitored. If the measurement sensor 13 indicates a fluorine concentration which lies above a predeterminable limit value, a leak in the inner wall 4 of the container 1 is inferred. Appropriate measures are then initiated, and in particular the supply of reaction gas to the internal space 3 is interrupted, if there still is one. As an alternative or in addition, a process of flushing the internal space 3 and the intermediate space 6 is initiated. In this way, the fluorine which is used as the reactive gas in this exemplary embodiment is removed from the internal space 3 and optionally also from the intermediate space 6, so as to prevent release to the environment and possible users being placed at risk.

Fig. 2 shows that the container 1 is connected to a device 14 for functionalizing a plastic container 1. The device 14 comprises a first internal space connection unit 15 which is releasably connected to the first internal space connection 10, and a second internal space connection unit 16 which is releasably connected to the second internal space connection 11.

During operation, reactive gas from a reactive gas source 17 is fed into the internal space 3 via the internal space control means 18 for the treatment time 8, and discharged via the second internal space connection 11. During the flushing times 7, 9, flushing gas from a flushing gas source 33 is fed into the internal space 3 via the internal space control means 18 and discharged via the second internal space connection 11. The second internal space connection unit 16 is part of an internal space gas outlet line 19, through which the exhaust gas is discharged from the internal space 3. A fluorine absorber 20 is formed in the internal space gas outlet line 19, in which the fluorine still contained in the exhaust gas is absorbed and therefore removed from the exhaust gas. Release of fluorine to the environment can thus be effectively prevented.

The internal space control means 18 comprises a first valve 21, by which the supply of reactive gas from the source 17 can be switched on and off, and in particular also regulated or adjusted. The internal space control means 18 furthermore comprises a second valve by which flushing gas, preferably nitrogen (N₂), from the source 33 can be delivered in a controlled way. In an alternative configuration, the reactive gas is delivered in a controlled way via the first valve 21, while nitrogen or an inert gas is delivered in a controlled way via the second valve 22. The volumetric composition of the reactive gas can thus be freely regulated. It is, however, preferable to supply an already prepared reactive gas from the source 17 via the first valve 21.

The measurement sensor 13 and the internal space control means 18 may be connected to a common drive instrument, which triggers shutdown of the reactive gas supply and/or the initiation of a flushing process when a predetermined limit value of the reactive substance concentration in the intermediate space is exceeded, and operates the internal space control means 18 accordingly. Preferably, the internal space connection units 15, 16 and the intermediate space connection unit 23 are formed so that they can be connected simply and reversibly to the container 1 to be functionalized.

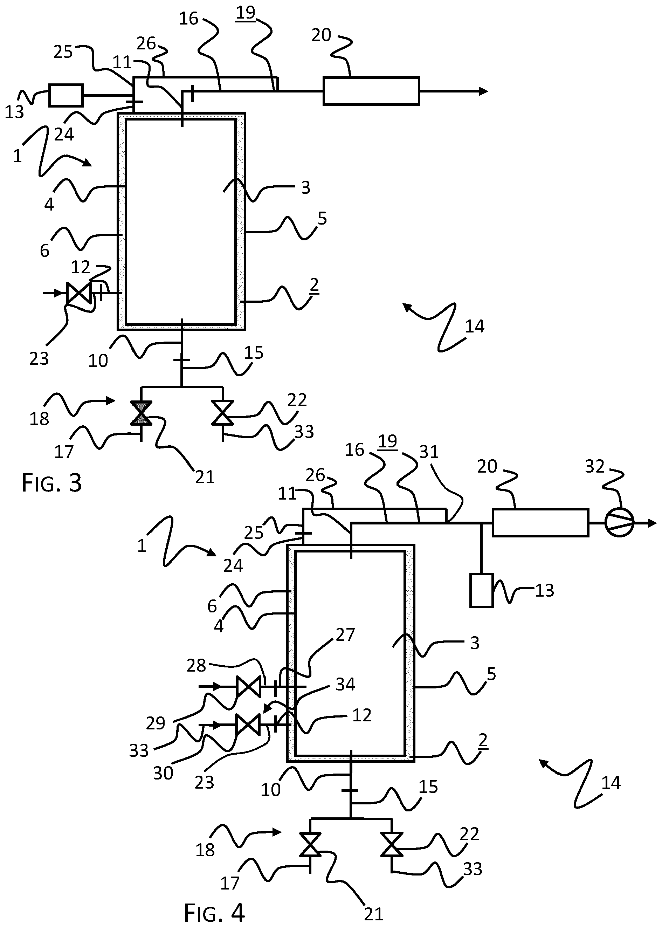

Fig. 3 schematically shows a second exemplary embodiment of the device 14 for carrying out the method according to the invention. Here - as well as in the description of the exemplary embodiment according to Fig. 4 - only the differences from the first exemplary embodiment will be explained below, and to this extent reference is made to the comments regarding the first exemplary embodiment. In contrast to the first exemplary embodiment according to Fig. 2, in this case the intermediate space 6 of the container 1 can also be flushed. To this end a first intermediate space connection unit 23 via which a flushing gas, for example nitrogen or air, can be introduced into the intermediate space 6 of the container 1, is connected to the first intermediate space connection 12. The container 1 furthermore has a second intermediate space connection 24, to which a second intermediate space connection unit 25 is connected. The latter is part of an intermediate space gas outlet line 26. A measurement sensor 13 for monitoring the concentration of the reactive substance in the intermediate space gas outlet line 26 is connected to the intermediate space gas outlet line 26. If the concentration of reactive substance in the exhaust gas flowing through the intermediate space gas outlet line lies above a predeterminable limit value, the supply of reactive gas is stopped and a process of flushing the internal space 3 of the container 1 is initiated. To this end, the internal space control means 18 are operated accordingly.

The intermediate space gas outlet line 26 opens into the internal space gas outlet line 19, so that the exhaust gas which is taken from the intermediate space 6 is likewise fed through the absorber 20.

Fig. 4 shows another exemplary embodiment of the device 14 allowing the implementation of the method according to the invention for functionalizing a plastic container 1. In this exemplary embodiment, both the internal space 3 and the intermediate space 6 of the container 1 are flushed with air. Correspondingly, the container 1 has a third internal space connection 27 to which a third internal space connection unit 28 is connected. Via the third internal space connection unit 28, which has a third valve 29 by which the inlet flow of gas can be opened and closed in a controlled way, flushing air flows into the internal space 3 during the flushing times 7, 9, and is extracted through the absorber 20 via the second internal space connection 11. The intermediate space 6 is also flushed in this exemplary embodiment, preferably with air, via the first intermediate space connection 12 and a first intermediate space connection unit 23, which is connected thereto and has a fourth valve 30. The fourth valve 30 is part of intermediate space control means 34 for controlling the flow of flushing gas from a source 33 through the first intermediate space connection unit 23. In this exemplary embodiment, the measurement sensor 13 is formed upstream of the absorber 20 but downstream of the opening 31 of the intermediate space gas outlet line 26 into the internal space gas outlet line 19. A delivery means 32, which may preferably comprise a pump or a compressor, is furthermore formed. A gas flow can be delivered through the internal space 3 and/or the intermediate space 6 by this delivery means 32.

The method according to the invention for functionalizing a plastic container 1 even makes it possible to functionalize containers 1 with very large volumes, which otherwise could not be functionalized or could be functionalized only with great difficulty. In particular, the method according to the invention is suitable for functionalizing containers 1 which have a volume of more than 1 m³ and up to 60 m³ or more. These sizes refer to the volume of the internal space 3. Such containers 1 are particularly preferably used for holding and storing chemicals, in particular acids or bases.

### List of References

- 1: container
- 2: double wall
- 3: internal space
- 4: inner wall
- 5: outer wall
- 6: intermediate space
- 7: first flushing time
- 8: treatment time
- 9: second flushing time
- 10: first internal space connection
- 11: second internal space connection
- 12: first intermediate space connection
- 13: measurement sensor
- 14: device for functionalizing a container
- 15: first internal space connection unit
- 16: second internal space connection unit
- 17: reactive gas source
- 18: internal space control means
- 19: internal space gas outlet line
- 20: absorber
- 21: first valve
- 22: second valve
- 23: first intermediate space connection unit
- 24: second intermediate space connection
- 25: second intermediate space connection unit
- 26: intermediate space gas outlet line
- 27: third internal space connection
- 28: third internal space connection unit
- 29: third valve
- 30: fourth valve
- 31: opening
- 32: delivery means
- 33: flushing gas source
- 34: intermediate space control means

## Claims

1. Method for functionalizing a plastic container (1), the container (1) being bounded externally by a double wall (2) which consists of an inner wall (4) forming an internal space (3) of the container (1) and an outer wall (5) surrounding the former, an intermediate space (6) being formed between the inner wall (4) and the outer wall (5), wherein a reactive gas comprising at least one of the following reactive substances:
a. fluorine; and
b. chlorine
is fed for at least a predeterminable treatment time (8) into the internal space (3), which is subsequently flushed for at least a predeterminable flushing time (7, 9) with a flushing gas free of reactive substances.

2. Method according to Claim 1, wherein the concentration of the at least one reactive substance in the intermediate space (6) is monitored at least during the at least one treatment time (8).

3. Method according to Claim 2, wherein the concentration of the at least one reactive substance in the intermediate space (6) is monitored by at least one of the following measures:
a. connecting the intermediate space (6) to a measurement sensor (13) for monitoring the concentration of the at least one reactive substance; and
b. flushing the intermediate space (6) with flushing gas, the concentration of the at least one reactive substance in the flushing gas being monitored downstream of the intermediate space (6).

4. Method according to one of Claims 2 and 3, wherein the feeding of the reactive gas into the internal space (3) is interrupted when the concentration of the at least one reactive substance in the intermediate space (6) exceeds a predeterminable limit value.

5. Method according to one of Claims 2 to 4, wherein flushing of the intermediate space (3) with flushing gas is initiated when the concentration of the at least one reactive substance in the intermediate space (6) exceeds a predeterminable limit value.

6. Plastic container (1) for functionalization by the method according to one of Claims 1 to 5, the container (1) being bounded externally by a double wall (2) which consists of an inner wall (4) forming an internal space (3) of the container (1) and an outer wall (5) surrounding the former, an intermediate space (6) being formed between the inner wall (4) and the outer wall (5), comprising :
- at least one internal space connection (10, 11, 27) through which at least one gas can be fed into the internal space (3) of the container (1) and/or discharged therefrom, and
- at least one intermediate space connection (23, 25) through which the intermediate space (6) can be connected to a measurement sensor (13) for the at least one reactive substance.

## Patentansprüche

1. Verfahren zum Funktionalisieren eines Kunststoffbehälters (1), wobei der Behälter (1) außenseitig durch eine Doppelwand (2) begrenzt ist, die aus einer Innenwand (4), die einen Innenraum (3) des Behälters (1) bildet, und einer Außenwand (5) besteht, die die erstere umgibt, wobei zwischen der Innenwand (4) und der Außenwand (5) ein Zwischenraum (6) gebildet ist, wobei ein reaktives Gas, das wenigstens eine der folgenden reaktiven Substanzen umfasst:
a. Fluor; und
b. Chor
für wenigstens eine vorbestimmbare Behandlungszeit (8) in den Innenraum (3) eingespeist wird, der anschließend für wenigstens eine vorbestimmbare Spülzeit (7, 9) mit einem Spülgas gespült wird, das frei von reaktiven Substanzen ist.

2. Verfahren nach Anspruch 1, wobei die Konzentration der wenigstens einen reaktiven Substanz in dem Zwischenraum (6) wenigstens während der wenigstens einen Behandlungszeit (8) überwacht wird.

3. Verfahren nach Anspruch 2, wobei die Konzentration der wenigstens einen reaktiven Substanz in dem Zwischenraum (6) durch wenigstens eine der folgenden Maßnahmen überwacht wird:
a. Verbinden des Zwischenraums (6) mit einem Messsensor (13) zum Überwachen der Konzentration der wenigstens einen reaktiven Substanz; und
b. Spülen des Zwischenraums (6) mit Spülgas, wobei die Konzentration der wenigstens einen reaktiven Substanz in dem Spülgas stromabwärts des Zwischenraums (6) überwacht wird.

4. Verfahren nach einem der Ansprüche 2 und 3, wobei das Einspeisen des reaktiven Gases in den Innenraum (3) unterbrochen wird, wenn die Konzentration der wenigstens einen reaktiven Substanz in dem Zwischenraum (6) einen vorbestimmbaren Grenzwert übersteigt.

5. Verfahren nach einem der Ansprüche 2 bis 4, wobei das Spülen des Zwischenraums (3) mit Spülgas ausgelöst wird, wenn die Konzentration der wenigstens einen reaktiven Substanz in dem Zwischenraum (6) einen vorbestimmbaren Grenzwert übersteigt.

6. Kunststoffbehälter (1) zum Funktionalisieren durch das Verfahren nach einem der Ansprüche 1 bis 5, wobei der Behälter (1) außenseitig durch eine Doppelwand (2) begrenzt ist, die aus einer Innenwand (4), die einen Innenraum (3) des Behälters (1) bildet, und einer Außenwand (5) besteht, die die erstere umgibt, wobei zwischen der Innenwand (4) und der Außenwand (5) ein Zwischenraum (6) gebildet ist, der umfasst:
- wenigstens eine Innenraumverbindung (10, 11, 27), durch die wenigstens ein Gas in den Innenraum (3) des Behälters (1) eingespeist und/oder aus demselben abgelassen werden kann, und
- wenigstens eine Zwischenraumverbindung (23, 25), durch die der Zwischenraum (6) mit einem Messsensor (13) für die wenigstens eine reaktive Substanz verbunden werden kann.

## Revendications

1. Procédé de fonctionnalisation d'un conteneur en plastique (1), le conteneur (1) étant délimité à l'extérieur par une double paroi (2) qui est constituée d'une paroi intérieure (4) formant un espace intérieur (3) du conteneur (1) et d'une paroi extérieure (5) enveloppant la première, un espace intermédiaire (6) étant formé entre la paroi intérieure (4) et la paroi extérieure (5), dans lequel un gaz réactif comprenant au moins l'une des substances réactives suivantes :
a. du fluor ; et
b. du chlore
est introduit pendant au moins un temps de traitement prédéterminable (8) dans l'espace intérieur (3), qui est ensuite rincé pendant au moins un temps de rinçage prédéterminable (7, 9) à l'aide d'un gaz de rinçage exempt de substances réactives.

2. Procédé selon la revendication 1, dans lequel la concentration de l'au moins une substance réactive dans l'espace intermédiaire (6) est surveillée au moins pendant l'au moins un temps de traitement (8).

3. Procédé selon la revendication 2, dans lequel la concentration de l'au moins une substance réactive dans l'espace intermédiaire (6) est surveillée par au moins l'une des mesures suivantes :
a. raccordement de l'espace intermédiaire (6) à un capteur de mesure (13) pour surveiller la concentration de l'au moins une substance réactive ; et
b. rinçage de l'espace intermédiaire (6) avec un gaz de rinçage, la concentration de l'au moins une substance réactive dans le gaz de rinçage étant surveillée en aval de l'espace intermédiaire (6).

4. Procédé selon l'une des revendications 2 et 3, dans lequel l'introduction du gaz réactif dans l'espace intérieur (3) est interrompue lorsque la concentration de l'au moins une substance réactive dans l'espace intermédiaire (6) dépasse une valeur limite prédéterminable.

5. Procédé selon l'une des revendications 2 à 4, dans lequel le rinçage de l'espace intermédiaire (3) avec un gaz de rinçage est déclenché lorsque la concentration de l'au moins une substance réactive dans l'espace intermédiaire (6) dépasse une valeur limite prédéterminable.

6. Conteneur en plastique (1) pour fonctionnalisation par le procédé selon l'une des revendications 1 à 5, le conteneur (1) étant délimité à l'extérieur par une double paroi (2) qui est constituée d'une paroi intérieure (4) formant un espace intérieur (3) du conteneur (1) et d'une paroi extérieure (5) enveloppant la première, un espace intermédiaire (6) étant formé entre la paroi intérieure (4) et la paroi extérieure (5), comprenant :
- au moins un raccord d'espace intérieur (10, 11, 27) à travers lequel au moins un gaz peut être introduit dans l'espace intérieur (3) du conteneur (1) et/ou évacué de celui-ci, et
- au moins un raccord d'espace intermédiaire (23, 25) à travers lequel l'espace intermédiaire (6) peut être raccordé à un capteur de mesure (13) pour l'au moins une substance réactive.
